# EUROPEAN PATENT SPECIFICATION

(11) **EP 3 662 653 B1**
(45) Date of publication and mention of the grant of the patent: **02.08.2023**
(21) Application number: 18746235.3
(22) Date of filing: 03.08.2018
(51) Int. Cl.: H04W 4/24, H04W 12/106, H04M 15/00, H04W 12/04, H04W 12/06

(54) **UE ADAPTED TO TRANSMIT SERVICE VALIDATION MESSAGES**
MOBILFUNKNUTZER ADAPTIERT UM SERVICE VALIDIERUNG NACHRICHTEN ZU SENDEN
UE ADAPTÉ POUR ENVOYER DES MESSAGES DE VALIDATION DE SERVICE

(30) Priority: 03.08.2017 EP 17184733
(43) Date of publication of application: 10.06.2020
(73) Proprietor: IPCom GmbH & Co. KG, 82049 Pullach (DE)
(72) Inventor: LUFT, Achim, 38118 Braunschweig (DE); HANS, Martin, 31162 Bad Salzdetfurth (DE)
(74) Representative: Tomlinson, Edward James
(86) International application number: PCT/EP2018/071160
(87) International publication number: WO 2019/025603

(56) References cited:
- EP-A2- 2 509 352
- WO-A1-2005/004456
- US-A1- 2002 161 723
- "3rd Generation Partnership Project; Technical Specification Group Services and System Aspects; 3GPP System Architecture Evolution (SAE); Security architecture (Release 15)", 3GPP DRAFT; 33401-F00, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , no. ;20170601 12 June 2017 (2017-06-12), XP051310313, Retrieved from the Internet: URL:http://www.3gpp.org/ftp/tsg_sa/WG3_Sec urity/TSGS3_87_Ljubljana/SA/33401-f00.doc [retrieved on 2017-06-12] cited in the application

## Description

The present invention relates to the transmission of service validation messages by a user equipment device (UE) in a mobile communications system.

GSM, UMTS and EPC (evolved packet core) networks provide functions that implement offline and/or online charging mechanisms on the bearer, subsystem and service levels. In order to support these charging mechanisms, the network performs real-time monitoring of resource usage on the above three levels in order to detect the relevant chargeable events.

In offline charging, a resource usage is reported from a network to a billing domain (BD) after the resource usage has occurred. In online charging, a subscriber account, located in an online charging system (OCS), is queried prior to granting permission to use the requested network resources.

Typical examples of network resource usage are a voice call of certain duration, the transport of a certain volume of data, or the submission of a multimedia message of a certain size. The network resource usage requests may be initiated by the UE or by the network.

Offline charging is a process where charging information for network resource usage is collected concurrently with that resource usage. The charging information is then passed through a chain of logical charging functions. At the end of this process, charging data record (CDR) files are generated by the network, which are then transferred to the network operator's billing domain for subscriber billing and/or inter-operator accounting (or additional functions, e.g. statistics, at the operator's discretion). The BD typically comprises post-processing systems such as the operator's billing system or billing mediation device. In conclusion, offline charging is a mechanism where charging information does not affect, in real-time, the service rendered.

Online charging is a process where charging information for network resource usage is collected concurrently with that resource usage in the same fashion as in offline charging. However, authorization for the network resource usage must be obtained by the network prior to the actual resource usage to occur. This authorization is granted by the OCS upon request from the network.

When receiving a network resource usage request, the network assembles the relevant charging information and generates a charging event towards the OCS in real-time. The OCS then returns an appropriate resource usage authorization. The resource usage authorization may be limited in its scope (e.g. volume of data or duration), therefore the authorization may have to be renewed from time to time as long as the user's network resource usage persists.

Online charging is a mechanism where charging information can affect, in real-time, the service rendered and therefore a direct interaction of the charging mechanism with the control of network resource usage is required.

A charging trigger function (CTF) generates charging events based on the observation of network resource usage. A charging data function (CDF) receives charging events from the CTF via a so-called Rf reference point. The CDF then uses the information contained in the charging events to construct CDRs. The CDRs produced by the CDF are transferred immediately to a charging gateway function (CGF) via a so-called Ga reference point. The CGF acts as a gateway between the 3GPP network and the BD. It uses a so-called Bx reference point for the transfer of CDR files to the BD. The OCF consists of two distinct modules, namely a session based charging function (SBCF) and an event based charging function (EBCF).

The SBCF is responsible for online charging of network / user sessions, e.g. voice calls, IP CAN bearers, IP CAN session or IMS sessions.

The EBCF performs event-based online charging in conjunction with any application server or service NE, including SIP application servers.

A rating function (RF) determines a value of the network resource usage (described in the charging event received by the OCF from the network) on behalf of the OCF.

An offline charging system (OFCS) is a grouping of charging functions used for offline charging. It collects and processes charging events from one or more CTFs, and it generates CDRs for subsequent offline downstream billing processes.

In case a subscriber is roaming and served by a visited network, both charging systems (in the visited network and in the home network) will charge the subscriber separately. Roaming charges usually are per minute for voice calls (different charge for mobile originated and mobile terminated voice calls), per SMS and per megabyte data volume. For charging reasons both networks communicate via a transferred account procedure (TAP). The transfer mechanism for TAP is a mechanism called customized applications for mobile network enhanced logic (CAMEL).

For all services provided by a visited network that are routed through the home network like e.g. voice calls, SMS, IMS, it is possible for the operator of the home network to validate all charges transferred from the serving network via the TAP. There exist already some services that are currently not routed through the home network, like local breakout internet access or locally routed voice over IP (VoIP) calls. These locally served services are likely to become more popular. The home operator lacks a mechanism to verify charges transferred from the serving network via the TAP for locally routed services. Currently operators must trust each other that services the serving network transmits charges for, have actually been provided to the roaming subscriber. There is need for a mechanism that enables the home operator to validate roaming charges.

US 2002/0161723 A1 describes a technique in which the identity of a UE is validated using keys stored in the UE and an authentication center in a conventional manner. When the UE is attached to a local network other than its home network, a shared secret key, shared by the home network operator and the UE is used to validate the UE with the local network operator. If a user of the UE wishes to make a purchase making use of the UE to authorize payment, messages are exchanged with a seller using a different communication network, with the UE signing a message from the seller to indicate acceptance of the transaction. A network signature verification service is then used to check the signature. The signature verification service is distinguished from the home network and the local network. As described, both the UE and the signature verification service are provided with the signing key

WO 2005/004456 describes a mechanism for charging a user of a UE using a visited network in which a home network issues accounting certificates which are sent to the UE enabling the UE to provide these to the service provider of the visited network.

The present invention provides a method of authenticating a transaction performed by a mobile communication user equipment, UE, device which has performed an authentication and key agreement procedure between the UE device and a mobile management entity of a visited network in order to establish a security context between the UE device and the visited network, the method comprising sending a service validation message from the UE device to the visited network, the service validation message having been digitally signed by the UE device using an integrity protection key shared between the UE device and a home network; and forwarding the service validation message from the visited network to the home network.

The present invention provides a mechanism that gives the home operator more control over roaming charges transferred via TAP. User consent could be part of this mechanism. One aspect of this mechanism is to establish a shared secret between a UE and a home operator and use this shared secret to generate integrity protected service validation messages. The shared secret could also be used to send integrity protected messages from the home operator network to the UE; e.g. a list with preferred or allowed visited networks. Several alternatives are provided as to how to transfer these service validation messages from the UE to the home operator. The most beneficial option is to enhance the CTF in the visited network, so the service validation messages generated in the roaming UE are added to the generated CDRs in the serving network and forwarded to the home operator via TAP charging messages. There are also several alternatives to share a secret between a UE and a home network which is unknown to the visited network. One option is to run an authentication and key agreement function (AKA) twice, but do not share the integrity protection key with the visited network for the second run. An advantage of this method is that there is no impact on existing SIM cards. In later phases of the 5G standardization it is possible that a key derivation function (KDF) will be used to derive all session keys from home network to visited network, i.e. the visited network does not receive the home network's keys but keys dedicated to the visited network derived from the home network's keys. In this case, the integrity protection key of the home network, now unknown to the visited network, can be used.

Particular aspects of the invention may give an operator control over roaming charges and/or establish more reliable roaming charge business agreements. An implementation of the invention may be based on technical means instead of trust and the invention enables a user to avoid fraud relating to roaming charges.

Preferred embodiments of the invention will now be described, by way of example only, with reference to the accompanying drawings in which:
Fig. 1 is a schematic representation of a mobile management entity requesting authentication vectors from a home environment
Fig. 2 is a schematic representation of an authentication and key agreement procedure; and
Fig. 3 is a message flow chart illustrating an embodiment of the invention.

In a first embodiment, a known initial challenge response mechanism called "authentication and key agreement" (AKA), in which session keys are generated is run twice in order to generate two different integrity keys. In a legacy LTE roaming scenario AKA is performed between a UE and a mobility management entity (MME) of the serving network once. The MME requests an authentication vector from the home operator including the challenge, the root session key K_{ASME} and the expected response to the challenge. The MME sends the challenge to the UE; the UE calculates the response to this challenge and the corresponding root session key. The UE sends the response back to the MME. The MME verifies the response with the help of the expected response. The generated session key is stored together with an identifier KSI_{ASME} in the UE and the MME and is used to establish a security context to the UE. The AKA procedure is described in 3GPP TS 33.401 v15.0.0.

In this embodiment, the AKA procedure is performed twice. The first run is as described above. In the second run only the challenge and the expected response is transferred from the home network to the serving network, i.e. a session root key K_{ASME}2 is kept in the home network and not given to the serving (visited) network. A root for the session key hierarchy for the security context between serving network and UE is K_{ASME}1 and the integrity protection key for the service confirmation message is derived from K_{ASME}2. Since the serving network has no knowledge of K_{ASME}2, the integrity protected service validation messages, signed with the integrity protection key only the UE and the home operator share with each other, cannot be generated by the serving network but only by the UE. In case the serving network changes the content of the service validation message the integrity verification in the home network will fail.

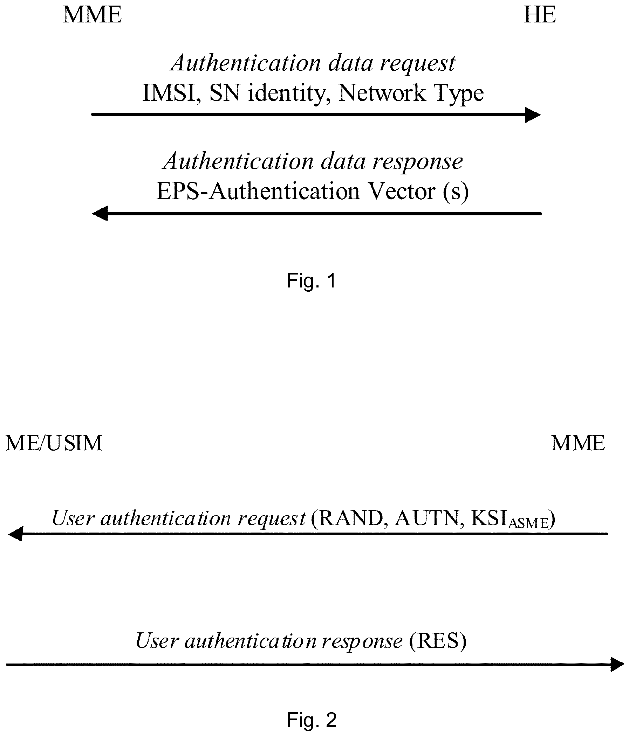

Fig. 1 illustrates an MME requesting one or more authentication vectors from a subscriber database in the home environment (HE) of the home operator's network. The AKA procedure is illustrated in Fig. 2 (prior-art).

In later standardization releases the current session keys known in the home network may not be forwarded from the home operator to the serving network. Accordingly, in a second embodiment, the session keys of the home operator stay only with the home operator and the session keys used in the serving network will be derived from the existing keys in the home network and the UE instead. In this case, the above procedure of a second AKA run is obsolete, as the UE and home operator can integrity protect their communication via the home operator's session keys.

If service validation messages are an optional feature that is only performed by the UE and the serving network in case the home network is requesting, it is then necessary to signal the request from the home operator's network to the serving network. It is beneficial to add the information in the response to the authentication request from the HE to the MME in the serving network. In a third embodiment, the home operator's network requests service validation messages in one or more dedicated messages to the serving network. In a fourth embodiment, the HE requests service authentication messages from the serving network implicitly by responding with one authentication vector more than requested.

Also, the UE needs to receive a request to generate service validation messages. This request could be sent as additional piece of information from home operator's network or serving network in the authentication process, e.g. in a non-access stratum (NAS) security mode command message. In another embodiment service validation messages are requested by the serving network to the UE in one or more dedicated messages. In one embodiment, the serving network requests service validation messages during an attach procedure, e.g. during authentication process or security context setup. In another embodiment, the serving network requests service validation messages on a per bearer basis during the bearer setup procedure. It is beneficial for the serving network to request a corresponding periodicity for the generation of service validation messages in the UE. In another embodiment, the UE decides the periodicity based on stored policy information provided by the home operator's network.

Whether service validation messages are requested and in which periodicity the UE is requested to generate service validation messages is in the home operator's discretion. It could be a per subscriber policy, or a per access class policy, or based on UE capabilities. In one embodiment, a service validation messages policy is stored in the HE of the home operator's network. In another embodiment, the service validation messages policy is part of a policy control and charging function (PCCF).

The service validation messages sent from the UE via the visited network to the home network have to be protected from replay attacks. This could be performed with timestamps or message sequence numbers or both. The first service validation message could be a validation in advance, i.e. it validates the setup or the reception of a configuration for setup of a service without a significant service provision being validated. This first service validation message should include a time stamp or the message sequence number 1 and when the second validation message can be expected; e.g. in one minute or in 100 Kbyte roaming data traffic or at the end of a phone call. From the second service validation message onwards, (for each service) the messages could include additional feedback information for the previous service period such as voice call quality for the previous minute of the voice call or the data rate of the last 100 Kbyte roaming data traffic.

The following is an example of such a service validation message.

| | | | | | | | |
|---|---|---|---|---|---|---|---|
| ID | Ver | SEQ | TS | P | SID | FB | MAC |

- ID:: Subscriber ID; e.g. GUTI (global unique temporary ID)
- Ver:: Protocol version information
- SEQ:: Message sequence number; e.g. 16 bit
- TS:: Timestamp
- P:: Expected periodicity of service validation messages for this service
- SID:: Service identifier (e.g. local breakout data service, voice call, bearer or PDU session ID)
- FB:: Feedback information for current service
- MAC:: Message authentication code as integrity protection with shared session key.

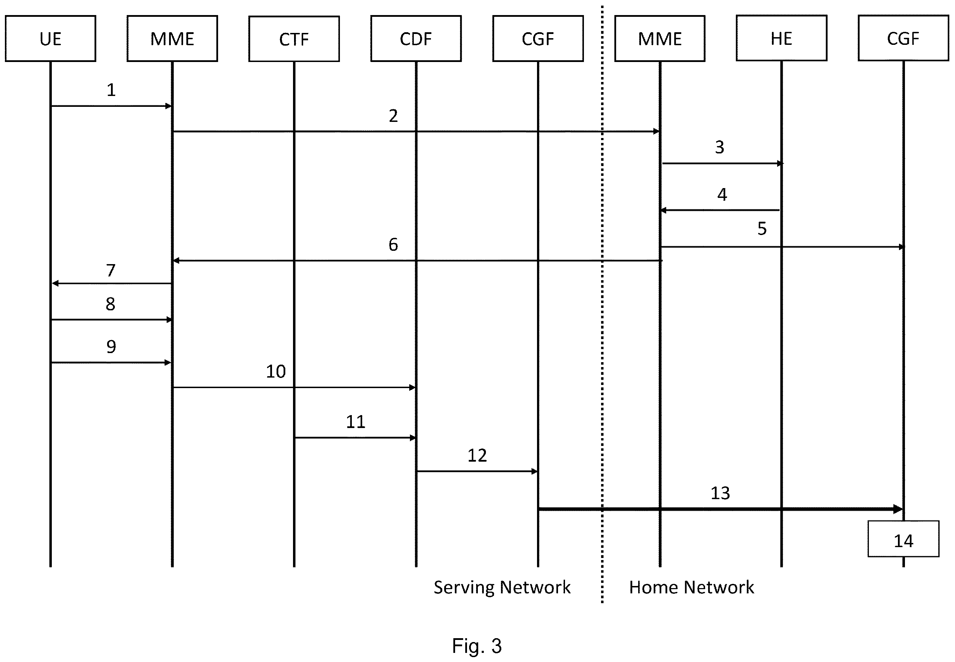

An exemplary message flow chart is shown in Fig. 3. A user turns on his UE in a foreign country. The UE finds during the registration procedure, step 1, a serving network with which the home operator has a roaming agreement. A home operator controlled list of allowed networks is stored in the SIM. The serving network requests in step 2 an authentication vector from the home operator for the roaming user. A mobility management entity MME of the serving network requests in step 3 one or more authentication vectors AV from a home environment HE of the home network. The HE responds in step 4 with the requested authentication vector and one additional authentication vector. The home network MME forwards in step 5 a session key for integrity protection derived out of the additional authentication vector to a charging gateway function. The serving network receives in step 6 two authentication vectors AV. One is complete as known in the prior-art and in a second AV according to the invention the root of the session key hierarchy (at least the session key for integrity protection) is not included. Reception of an additional authentication vector could implicitly signal the serving network that service validation messages are requested from the home operator network. This request could also be explicitly with a NAS service validation request within messages between the MME and HE according to 3GPP TS 33.401. The AKA run as part of the authentication procedure in the prior-art according to TS 33.401 is not shown in the figure. The serving network then performs a second AKA (or the potential successor AKA*) procedure in step 7 in which the serving network signals in a NAS security mode command message to the UE that the session key for integrity protection of this additional AKA run shall be used to sign service validation messages and that these service validation messages are requested. The UE confirms in step 8 the request in the NAS security mode complete message to the serving network. The integrity protection key resulting of the second AKA run is stored in the UE in order to generate the MAC field of service validation messages.

The user now initiates a locally routed voice call and therefore a first service validation message is generated in the UE and sent in step 9 a NAS service validation message to the serving mobility management entity (MME) of the serving network. The first service validation message contains the GUTI of the user, the message sequence number "1", current time stamp, expected periodicity of one minute, as service identifier "local voice call", empty feedback information field and a valid message authentication code for the first seven fields of the message.

The serving network MME forwards in step 10 the validation message to the charging data function CDF. The CDF also receives in step 11 a charging events message from the charging trigger function CTF and generates a CDR and according to this invention concatenates the service validation message to the CDR. As the service validation messages are generated by the UE autonomously, configured or influenced by the home or visited network. It is beneficial to synchronize a service validation message with the CDRs, so that with each CDR a corresponding service validation message is concatenated, but a not synchronous solution would be possible as well. In this case a single CDR may include zero, one or more validation messages depending on availability of the message in the CDR. In case more than one service validation messages are contained in a single CDR, some may validate previous CDRs that did not contain service validation messages.

The CDR (with the service validation message concatenated) produced by the CDF is transferred in step 12 immediately to the charging gateway function CGF via the Ga reference point. The CGF generates in step 13 a TAP charging message with the service validation message included, which is transferred via the CAMEL interface over SS7 to the CGF of the home operator. The CGF of the home operator validates in step 14 the requested service validation message before proceeding with the charging procedure.

An alternative to the above is the generation of service validation messages based on a trigger from the visited network. The CDF or any other entity of the charging system of the visited network may trigger the UE in a new NAS message or with new information in a known NAS message to generate a service validation message so that it is ensured that every TAP charging message includes one service validation message validating the charged-for service. In this alternative, as the UE does not control the time of generation of service validation messages, the messages may not contain any information about expected next service validation message, i.e. there is no periodicity information.

Service validation messages may be generated in the UE to validate a setup or provision of a service by a visited (roamed-to) network. The service validation message may comprise service information relating to a service setup or provisioned by the visited network and a signature validating the service information to the home network.

The invention provides in one aspect a transmission of the service validation message to the visited network for transmission to the home network in relation to a charging information from the visited to the home network about a setup or provisioned service to be charged (CDR).

In summary, this invention provides for the transmission of service validation messages by a visited network to the home network in relation to a charging information (CDR) from the visited to the home network about a setup or provisioned service to be charged. The Service validation messages may comprise integrity protection with a key shared between UE and home operator, replay protection with timestamps or message sequence numbers or both, first service validation message in advance, expected periodicity of following messages in a first message or all messages, feedback for last service period, a service validation message per service; e.g. data traffic and voice call service, and service validation messages triggered by the visited network, i.e. generated on-demand from the visited network. An Integrity protection key shared between UE and home operator is either generated via a second AKA run, or achieved by deriving exclusive session keys for the serving network.

## Claims

1. A method of authenticating a transaction performed by a mobile communication user equipment, UE, device which has performed an authentication and key agreement procedure between the UE device and a mobile management entity of a visited network in order to establish a security context between the UE device and the visited network, the method comprising:
sending a service validation message (9) from the UE device to the visited network, the service validation message being a message from the UE device validating a setup or a provision of a service by the visited network which has been digitally signed by the UE device using an integrity protection key shared only between the UE device and a home network; and
forwarding the service validation message (10) from the visited network to the home network.

2. The method according to claim 1, wherein the integrity protection key is obtained by performing a second authentication and key agreement procedure (7) in which the home network provides an authentication vector which does not contain either a root of a session key hierarchy or a session key for integrity protection.

3. The method according to claim 1, wherein the integrity protection key is obtained by performing a second authentication and key agreement procedure in which the home network provides only a challenge and an expected response to the challenge to the visited network.

4. The method according to claim 1, wherein the security context between the UE device and the visited network is established using an integrity protection key derived from an existing key in the home network.

5. The method according to any preceding claim, wherein the service validation message includes at least one of a time stamp and a message sequence number.

6. The method according to any preceding claim, wherein the service validation message is transmitted in response to a request (6).

7. The method according to claim 6, wherein the request is transmitted as part of a non-access stratum message.

8. The method according to one of claims 1 to 6, wherein the service validation message is transmitted autonomously by the UE device.

9. The method according to any preceding claim, wherein the service validation message is concatenated with a charging data record by the visited network and the concatenated message is transmitted to a charging gateway function of the home network.

## Patentansprüche

1. Verfahren zum Authentifizieren einer Transaktion, die von einer Mobilkommunikationsbenutzerausrüstung-, UE, Vorrichtung durchgeführt wird, die eine Authentifizierungs- und Schlüsselaustauschprozedur zwischen der UE-Vorrichtung und einer Mobilverwaltungsinstanz eines besuchten Netzwerks durchgeführt hat, um einen Sicherheitskontext zwischen der UE-Vorrichtung und dem besuchten Netzwerk einzurichten, wobei das Verfahren Folgendes umfasst:
Senden einer Dienstvalidierungsnachricht (9) von der UE-Vorrichtung an das besuchte Netzwerk, wobei die Dienstvalidierungsnachricht eine Nachricht von der UE-Vorrichtung ist, die ein Setup oder eine Bereitstellung eines Dienstes durch das besuchte Netzwerk validiert, das digital von der UE-Vorrichtung unter Verwendung eines Integritätsschutzschlüssels gezeichnet wurde, der nur zwischen der UE-Vorrichtung und einem Heimnetzwerk geteilt wird; und
Weiterleiten der Dienstvalidierungsnachricht (10) von dem besuchten Netzwerk an das Heimnetzwerk.

2. Verfahren nach Anspruch 1, wobei der Integritätsschutzschlüssel erhalten wird, indem eine zweite Authentifizierungs- und Schlüsselaustauschprozedur (7) durchgeführt wird, in der das Heimnetzwerk einen Authentifizierungsvektor bereitstellt, der weder eine Wurzel einer Sitzungsschlüsselhierarchie noch einen Sitzungsschlüssel zum Integritätsschutz enthält.

3. Verfahren nach Anspruch 1, wobei der Integritätsschutzschlüssel erhalten wird, indem eine zweite Authentifizierungs- und Schlüsselaustauschprozedur durchgeführt wird, in der das Heimnetzwerk nur eine Aufforderung und eine erwartete Antwort auf die Aufforderung an das besuchte Netzwerk bereitstellt.

4. Verfahren nach Anspruch 1, wobei der Sicherheitskontext zwischen der UE-Vorrichtung und dem besuchten Netzwerk unter Verwendung eines Integritätsschutzschlüssels eingerichtet wird, der von einem bestehenden Schlüssel in dem Heimnetzwerk abgeleitet wird.

5. Verfahren nach einem vorstehenden Anspruch, wobei die Dienstvalidierungsnachricht zumindest eines von einem Zeitstempel und einer Nachrichtenfolgenummer beinhaltet.

6. Verfahren nach einem vorstehenden Anspruch, wobei die Dienstvalidierungsnachricht in Reaktion auf eine Anforderung (6) übertragen wird.

7. Verfahren nach Anspruch 6, wobei die Anforderung als Teil einer Non-Access-Stratum-Nachricht übertragen wird.

8. Verfahren nach einem der Ansprüche 1 bis 6, wobei die Dienstvalidierungsnachricht autonom von der UE-Vorrichtung übertragen wird.

9. Verfahren nach einem vorstehenden Anspruch, wobei die Dienstvalidierungsnachricht mit einer Verrechnungsdatenaufzeichnung von dem besuchten Netzwerk konkateniert ist und die konkatenierte Nachricht an eine Verrechnungsgateway-Funktion des Heimnetzwerks übertragen wird.

## Revendications

1. Procédé d'authentification d'une transaction effectuée par un dispositif d'équipement utilisateur, UE, de communication mobile qui a effectué une procédure d'authentification et d'accord de clé entre le dispositif UE et une entité de gestion mobile d'un réseau visité afin d'établir un contexte de sécurité entre le dispositif UE et le réseau visité, le procédé comprenant les étapes consistant à :
envoyer un message de validation de service (9) depuis le dispositif UE vers le réseau visité, le message de validation de service étant un message provenant du dispositif UE validant une configuration ou une fourniture d'un service par le réseau visité qui a été signé numériquement par le dispositif UE à l'aide d'une clé de protection d'intégrité partagée uniquement entre le dispositif UE et un réseau domestique ; et
transférer le message de validation de service (10) du réseau visité au réseau domestique.

2. Procédé selon la revendication 1, dans lequel la clé de protection d'intégrité est obtenue en effectuant une seconde procédure d'authentification et d'accord de clé (7) dans laquelle le réseau domestique fournit un vecteur d'authentification qui ne contient ni une racine d'une hiérarchie de clé de session ni une clé de session pour la protection d'intégrité.

3. Procédé selon la revendication 1, dans lequel la clé de protection d'intégrité est obtenue en effectuant une seconde procédure d'authentification et d'accord de clé dans laquelle le réseau domestique ne fournit au réseau visité qu'un défi et une réponse attendue au défi.

4. Procédé selon la revendication 1, dans lequel le contexte de sécurité entre le dispositif UE et le réseau visité est établi à l'aide d'une clé de protection d'intégrité dérivée d'une clé existante dans le réseau domestique.

5. Procédé selon une quelconque revendication précédente, dans lequel le message de validation de service inclut au moins l'un parmi un horodatage et un numéro de séquence de message.

6. Procédé selon une quelconque revendication précédente, dans lequel le message de validation de service est transmis en réponse à une demande (6).

7. Procédé selon la revendication 6, dans lequel la demande est transmise en tant que partie d'un message de strate de non-accès.

8. Procédé selon l'une des revendications 1 à 6, dans lequel le message de validation de service est transmis de manière autonome par le dispositif UE.

9. Procédé selon une quelconque revendication précédente, dans lequel le message de validation de service est concaténé avec un enregistrement de données de tarification par le réseau visité et le message concaténé est transmis à une fonction de passerelle de tarification du réseau domestique.
